# EUROPEAN PATENT SPECIFICATION

(11) **EP 0 473 437 B1**
(45) Date of publication and mention of the grant of the patent: **22.05.1996**
(21) Application number: 91307928.1
(22) Date of filing: 29.08.1991
(51) Int. Cl.: G11B 23/38, G11B 23/04

(54) **Tape Cassette**
Bandkassette
Cassette à bande

(30) Priority: 30.08.1990 JP 226467/90
(43) Date of publication of application: 04.03.1992
(73) Proprietor: SONY CORPORATION, Tokyo 141 (JP)
(72) Inventor: Suzuki, Kazuyoshi, c/o Patents Division, Shinagawa-ku, Tokyo 141 (JP); Fujii, Hiroshi, c/o Patents Division, Shinagawa-ku, Tokyo 141 (JP)
(74) Representative: Purvis, William Michael Cameron

(56) References cited:
- DD-A- 153 645
- DE-A- 3 213 621
- DE-A- 3 340 942
- DE-A- 3 517 584
- DE-A- 3 639 818
- GB-A- 2 185 142

## Description

The invention relates to a video tape cassette.

In a tape player capable of admitting two kinds of tape cassettes and individually recording two kinds of signals different from each other in a signal transmitting system, there are some problems to be considered. One of the problems is that there is a possibility that an information reading member provided in the tape player for reading various information relating to one of the tape cassettes hinders a loading operation of the other tape cassette into the tape player or malfunctions due to the loading of the other tape cassette.

For instance, a tape player capable of admitting both a tape cassette for recording a signal of the NTSC system and a tape cassette for recording a signal of the high definition television (HD) system (the latter will be hereinafter referred to as "HD tape cassette") will now be considered.

At present, examples of tape cassette for recording a signal of the NTSC system include a VHS tape cassette, beta tape cassette, 8-mm tape cassette, and VHS · C tape cassette. Above all, the VHS tape cassette will now be considered.

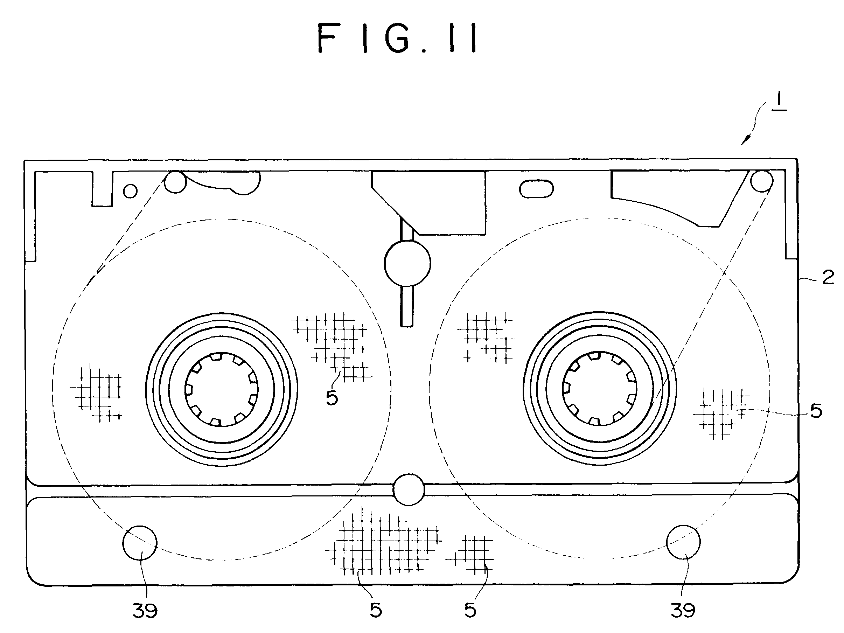

With reference to Figures 11, 12, 13 and 14 of the accompanying drawings, a VHS tape cassette 1 has a cassette case 2.

As means for indicating predetermined information relating to the tape cassette 1, it is general to define a predetermined position on the tape cassette and indicate the information by the presence or absence of a hole at this predetermined position.

The cassette case 2 of the tape cassette 1 contains various components including tape reels, and little spare room exists in the cassette case. That is, as the above-mentioned information indicating hole cannot be formed at a position corresponding to a region where the various components are located in the cassette case, the forming position of the hole is somewhat limited.

The two rear corner portions 4 of a lower surface of the cassette case 2 are regions at which there would be relatively little interference with the various components in the cassette case 2.

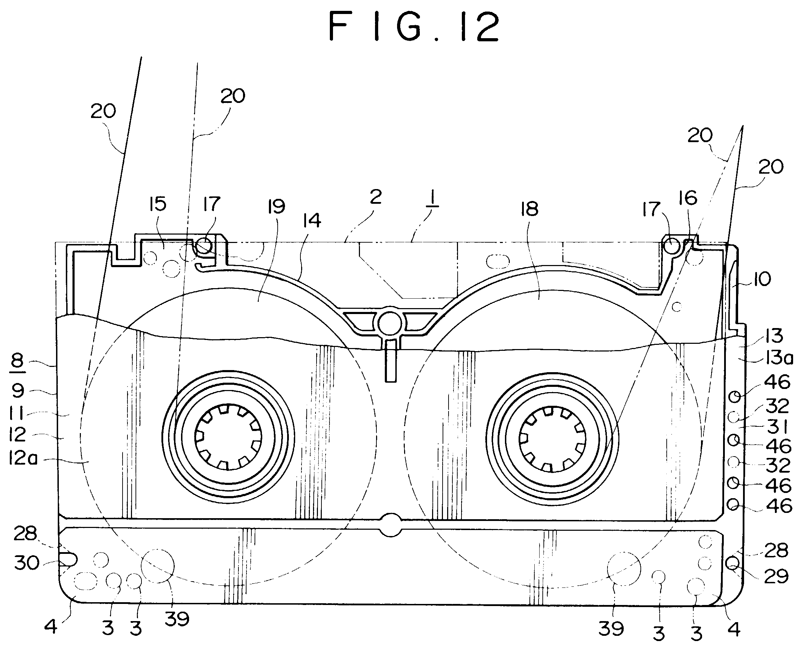

It is accordingly assumed that two rear corner portions of a lower surface of a cassette case of the HD tape cassette similar in external form to the VHS tape cassette 1 are defined as an information recognizing portion (which is shown in Figure 12 as a plurality of two-dot chain line circles 3 formed on the lower surface of the cassette case 2 of the VHS tape cassette 1, for convenience). In this case, when the VHS tape cassette 1 is loaded into a cassette holder of the tape player, detection switches to detect the presence or absence of the hole are all undesirably depressed by the lower surface of the cassette case 2.

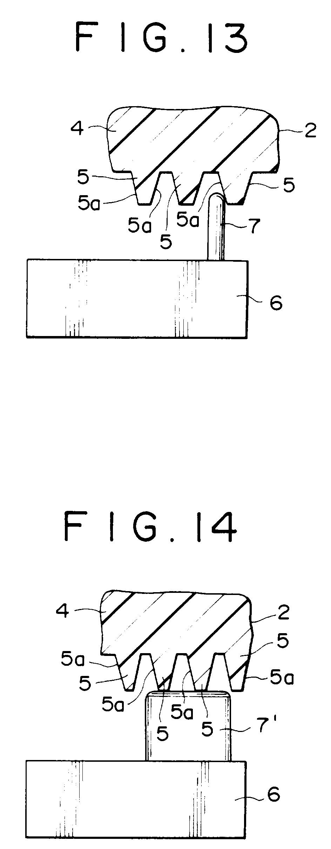

Further, as the two corner portions 4 of the VHS tape cassette 1 are surfaces especially not specified as special areas according to the EIAJ Standard, these portions 4 are normally formed with a plurality of projections 5 for preventing slippage. Accordingly, an upper end of a pin 7 of a detection switch 6 provided in the tape player abuts against an angled surface 5a of the projection 5 as shown in Figure 13 or engages between two adjacent projections 5, with the possibility that the detection switch 6 will not precisely operate or that it is broken by long-term operation. To solve this problem, it may be considered to provide a pin 7' having a large upper surface as shown in Figure 14. However, it may then be necessary to increase the spacing at which the detection switches 6 are provided, which results in other problems such as that a large quantity of information cannot be indicated in a limited region.

In the case of use of a non-contact type of information reading member such as a reflection type photosensor rather than a contact type detection switch as mentioned above, a reflected light quantity cannot be stably obtained due to the projections 5 of the VHS tape cassette 1, causing malfunction.

According to the invention there is provided a video tape cassette having a cassette case composed of an upper half and a lower half, a take-up reel and a supply reel accommodated in the cassette case, a magnetic recording tape wrapped around the take-up reel and the supply reel and information recognizing means to indicate information relating to a content of the tape cassette, the information recognizing means including a plurality of holes to indicate predetermined characteristics of the tape cassette formed in a line along a corner portion where a bottom wall and a side wall of the lower half intersect one another;
characterised in that the corner portion is formed with an elongate recess extending along the side wall, and the information recognizing means is formed on a wall of the elongate recess.

Such a tape cassette can eliminate interference of an information reading member provided in a tape player for reading various information relating to the tape cassette upon loading a different type tape cassette having an external size slightly smaller than that of the tape cassette with which the invention is concerned into the tape player, and can also eliminate malfunction of the information reading member upon loading the different type tape cassette into the tape player.

The invention is diagrammatically illustrated by way of example in the accompanying drawings, in which:-
Figure 1 is a bottom plan view of a tape cassette according to an embodiment of the invention;
Figure 2 is a top plan view of the tape cassette shown in Figure 1;
Figure 3 is a right side view of the tape cassette of Figure 2;
Figure 4 is a left side view of the tape cassette of Figure 2;
Figure 5 is an exploded perspective view of the tape cassette shown in Figure 1;
Figure 6A is a cross section taken on line VI-VI in Figure 2, showing a closed condition of the front lid;
Figure 6B is a view similar to Figure 6A, showing an open condition of front lid;
Figure 7 is a schematic front elevational view of a tape player in which a tape cassette according to the invention can be received;
Figure 8 is a sectional view corresponding to Figure 7 taken along the right and left direction showing a loaded condition of the tape cassette;
Figure 9 is a sectional view corresponding to Figure 7 taken along the front and rear direction showing the loaded condition of the tape cassette;
Figure 10 is a view similar to Figure 8, showing the loaded condition of another type of tape cassette;
Figure 11 is a bottom plan view of the different type of tape cassette;
Figure 12 is a partially cut-away bottom plan view illustrating a superimposed condition of a tape cassette according to the invention and the different type tape cassette of Figure 11;
Figure 13 is a sectional view of the different type tape cassette of Figure 11, illustrating a problem thereof; and
Figure 14 is a view similar to Figure 13, illustrating another problem of the different type tape cassette of Figure 11.

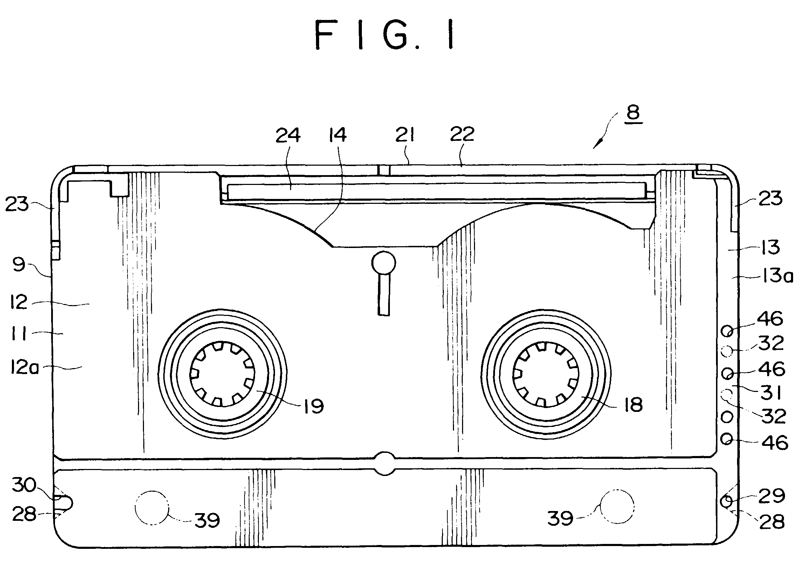

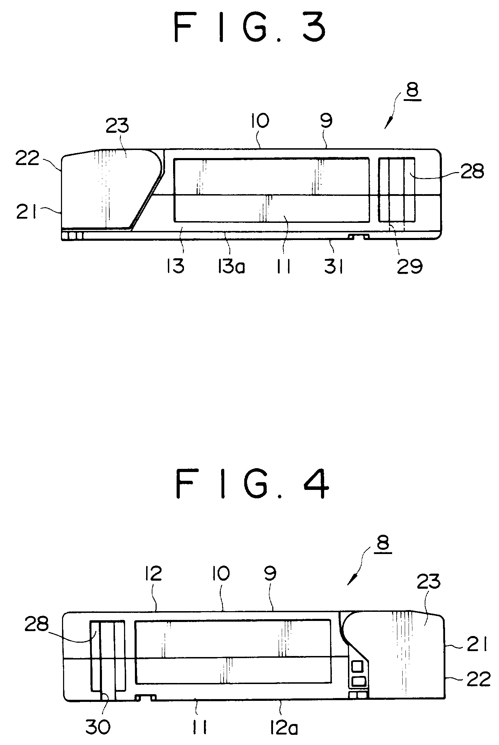

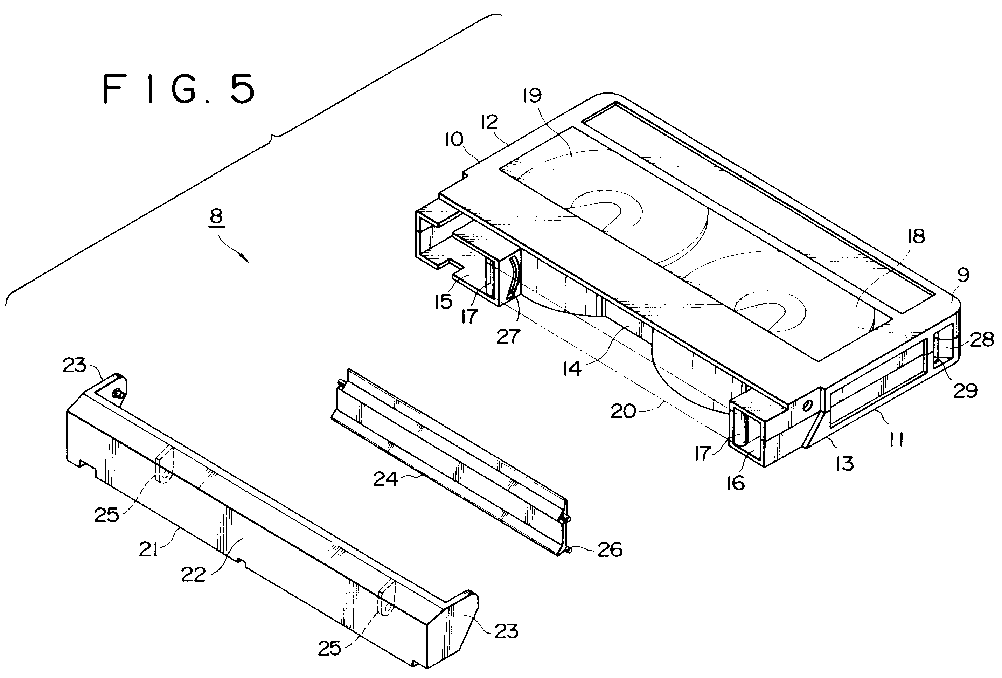

Referring to the drawings, and firstly to Figures 1 to 6, an HD tape cassette 8 has an external form similar to that of the VHS tape cassette 1 with a cassette case 9 constructed of an upper half 10 and a lower half 11 connected together to form a rectangular thin box-like configuration.

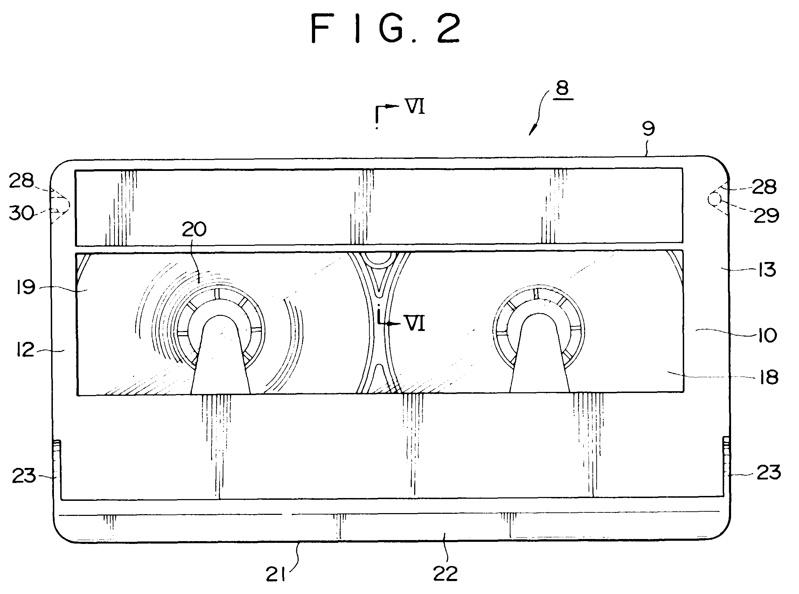

The cassette case 9 includes a main portion 12 having almost the same external form, especially, dimensions (length, width and thickness) as that of the cassette case 2 of the VHS tape cassette 1. An additional portion 13 projects from a right side of the main portion 12 as viewed in Figure 2. (In the following description, the terms "right", "left, "front" and "rear" will be used in accordance with the right, left, front and rear directions as viewed in Figure 2). The additional portion 13 has a width in the front and rear direction equal to that of the main portion 12, a very small width in the right and left direction, e.g., about 3% of that of the main portion 12, and a thickness slightly smaller than that of the main portion 12, e.g. about 90% or less of that of the main portion 12. An upper surface of the additional portion 13 is flush with an upper surface of the main portion 12. Accordingly, a lower surface 13a of the additional portion 13 is slightly higher than a lower surface 12a of the main portion 12. That is, there is defined a shallow elongate recess extending between a front end and a rear end of the right edge of the lower surface of the cassette case 9.

An internal space of the main portion 12 fully communicates with that of the additional portion 13.

The cassette case 9 is formed on its front surface with a tape drawing recess 14 elongate in the right and left direction. Upon loading the tape cassette 8 into a tape player, a member for drawing a magnetic tape 20 out of the cassette case 9 and a capstan are inserted into the tape drawing recess 14.

A right portion of the tape drawing recess 14 is elongate somewhat more than a left portion thereof. If the cassette case 9 of the HD tape cassette 8 and the cassette case 2 of the VHS tape cassette 1 are superimposed with each other with the left side surface of the cassette case 9 positioned flush with the left side surface of the cassette case 2 (see Figure 12), a plurality of independent recesses of the cassette case 2 should be all included in the tape drawing recess 14 of the cassette case 9.

A portion of the front surface of the cassette case 9 on the right and left sides of the tape drawing recess 14 is open to form tape outlets 15 and 16.

A pair of tape guides 17 are vertically formed in the inner ends of the tape outlets 15 and 16 at the tape drawing recess 14.

A pair of tape reels 18 and 19 are rotatably accommodated in the cassette case 9, and opposite end portions of the magnetic tape 20 are wrapped around the tape reels 18 and 19. The magnetic tape 20 is partially led out of the cassette case 9 from the tape outlets 15 and 16. In an unloaded condition of the tape cassette 8, a lead-out portion of the magnetic tape 20 outside the cassette case 9 is guided at its opposite ends by the two tape guides 17 under a stretched condition in front of the tape drawing recess 14.

As mentioned above, the right portion of the tape drawing recess 14 is elongate more than the left portion thereof. Accordingly, an opening area of the right tape outlet 16 is smaller than that of the left tape outlet 15. However, since the additional portion 13 is formed on the right side of the cassette case 9, the opening area of the right tape outlet 16 can be somewhat enlarged. With this construction, as shown in Figure 12, upon loading the tape cassette 8, the magnetic tape 20 can be drawn out of the cassette case 9 without contacting the tape guides 7 and the cassette case 9. In Figure 12, a solid line indicating the magnetic tape 20 shows a path of the magnetic tape 20 under the condition where a roll diameter of the magnetic tape 20 wrapped around the tape reel 18 or 19 is maximum, while a two-dot chain line indicating the magnetic tape 20 shows a path of the magnetic tape 20 under the condition where the roll diameter is minimum.

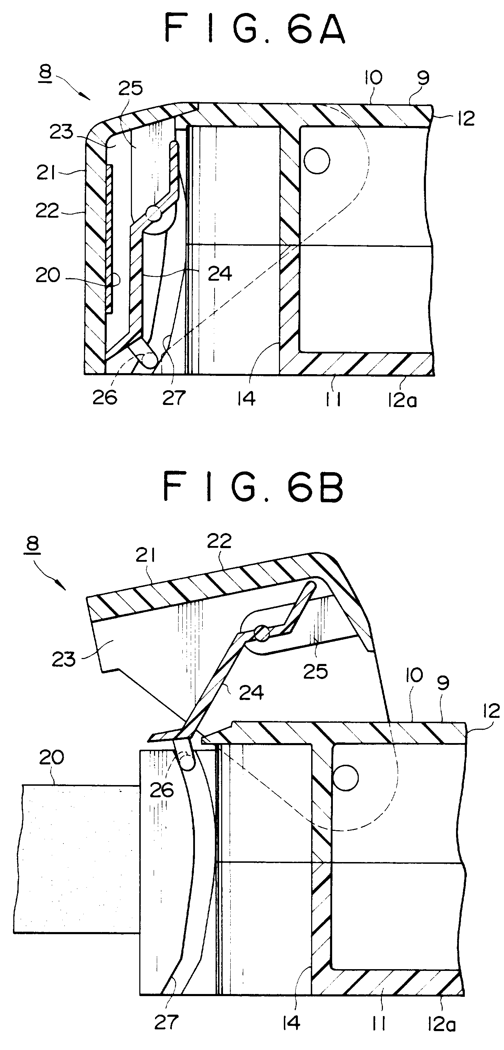

A front lid 21 opens and closes the front surface of the cassette case 9 from which the magnetic tape 20 is drawn. The front lid 21 is integrally formed with a cover portion 22 having a substantially inverted L-shape in vertical cross section and with a pair of side portions 23 projecting rearwardly from the right and left sides of the cover portion 22. The side portions 22 of the front lid 21 are rotatably supported at two positions near its rear ends to the right and left side surfaces of the cassette case 9 near the front ends thereof. Accordingly, the front lid 21 can be moved between a closed position shown in Figure 6A where a front surface of the magnetic tape 20 stretched along the front surface of the cassette case 9 is covered and an open position shown in Figure 6B where the cover portion 22 is moved upwardly to open the front of the cassette case.

A back lid has a substantially thin plate-like shape and a length slightly smaller than the length of the tape drawing recess 13 of the cassette case 9.

The back lid 24 is rotatably supported at opposite side positions near its upper ends to a pair of support lugs 25 formed on the cover portion 22 of the front lid 21. Further, a par of pins 26 project sidewardly from the lower ends of the right and left sides of the back lid 24, and a par of guide grooves 27 are formed on the right and left inner wall surfaces of the tape drawing recess 14 of the cassette case 9. The right and left pins 26 of the back lid 24 are slidably engaged with the right and left guide grooves 27 of the cassette case 9, respectively.

In the closed position of the front lid 21, the back lid 24 is n a closed position where it covers a back surface of the magnetic tape 20 as shown in Figure 6A. In the open position of the front lid 21, the back lid 24 is in an open position where it is located above the front end portion of the cassette case 9 as shown in Figure 6B. During movement of the back lid 24 between the closed position and the open position, the attitude of the back lid 24 is controlled by the position of the portion supported by the front lid 21 and the position of the pins 26 moving along the guide grooves 27.

A pair of gripping recesses 28 are formed near the rear ends of the right and left side surfaces of the cassette case 9. Each gripping recess 28 is vertically elongate and formed like a V-shaped groove. Upper and lower ends of each gripping recess 28 terminate just before the upper and lower surfaces of the cassette case 9. Each gripping recess 18 is provided to be engaged by a retaining member of an autochanger mechanism, for example. A depth of each gripping recess 28 is set to be equal to or slightly smaller than the width of the additional portion 13 of the cassette case 9 in the right and left direction.

A circular reference hole 29 extends through a bottom wall of the additional portion 13 of the cassette case 9 at a position corresponding to the right gripping recess 28. Accordingly, the reference hole 29 communicates with the right gripping recess 28.

A directional positioning hole 30 extends through a bottom wall of the main portion 12 of the cassette case 9 at a position corresponding to the left gripping recess 28. The directional positioning hole 30 is formed as a cutout elongate in the right and left direction such that a left end of the cutout is flush with the left side surface of the cassette case 9. Accordingly, the directional positioning hole 30 also communicates with the left gripping recess 28.

An information recognizing portion 31 is formed on the bottom wall of the additional portion 13 of the cassette case 9 n a region other than the front and rear end portions of the bottom wall. Upon loading the tape cassette into a tape player, the tape player can recognize whether the tape cassette loaded thereinto is a VHS tape cassette or an HD tape cassette, the kind of magnetic characteristic of the tape, that is, a difference in magnetic particle material or a difference in forming method of the tape such as by coating or depositing magnetic particles, the length of the tape, the thickness of the tape, the diameters of the tape reels around which the tape is wrapped, whether or not a frequency band of a signal to be recorded is wide, whether or not the tape is a soft tape having a previously recorded signal, whether or not a signal is re-recordable on the tape, etc. according to the presence or absence of holes at circular portions 32 in the information recognizing portion 31.

Now, there will be briefly described a tape player 33 by way of example to which both the HD tape cassette 8 and the VHS tape cassette 1 can be commonly applied.

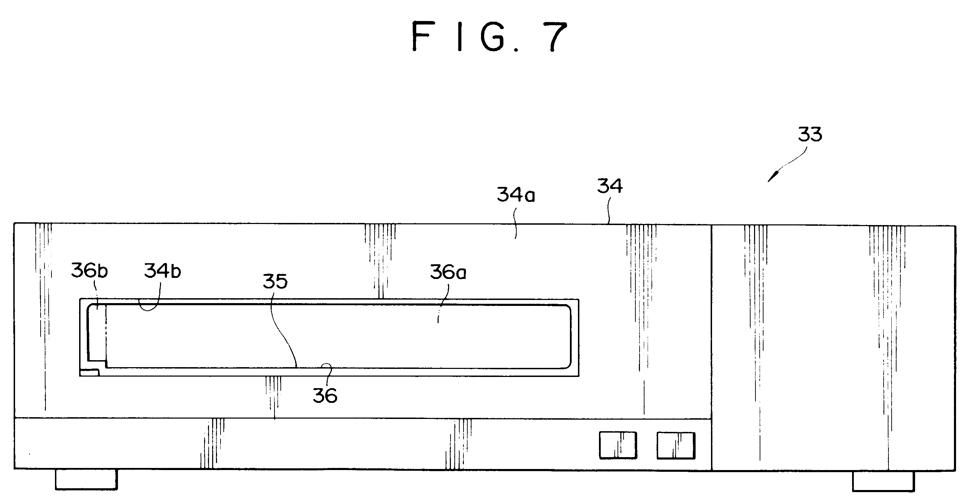

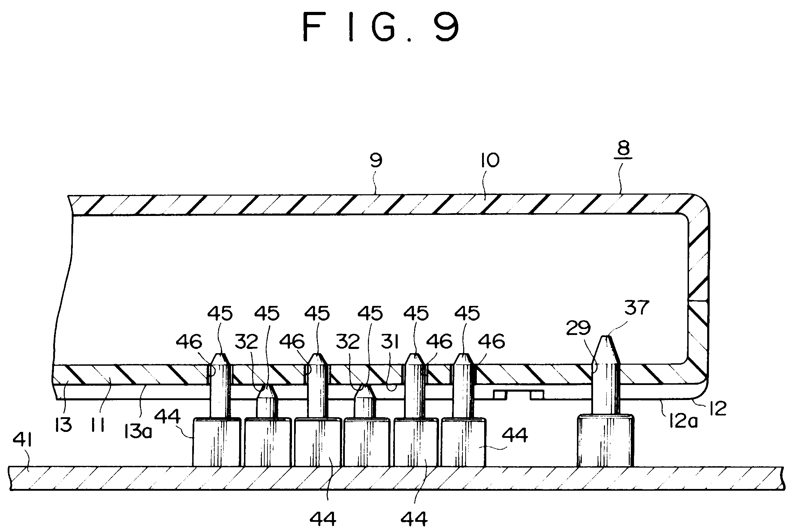

With reference to Figures 7 to 10, the tape player 33 has a housing 34 with a front panel 34a formed with a cassette insertion opening 34b horizontally elongate n a rectangular shape. A tape cassette 1 or 8 is loaded and unloaded through the cassette insertion opening 34b.

A cassette holder 35 can hold the tape cassette 1 or 8 in a predetermined loading position. The tape cassette 1 or 8 is inserted through the cassette insertion opening 34b into the cassette holder 35.

The cassette holder 35 is formed with a cassette receiving aperture 36 having an elevational shape substantially equal to that of the cassette case 9 of the HD tape cassette 8. The cassette receving aperture 36 comprises a common portion 36a having an elevational shape substantially equal to that of the man portion 12 of the cassette case 9 and an additional portion 36b having an elevational shape substantially equal to that of the additional portion 13 of the cassette case 9. The additional portion 36b is formed continuously with one side of the common portion 36a. Further, an upper inner surface of the common portion 36a is flush with an upper inner surface of the additional portion 36b. Therefore, a lower inner surface of the additional portion 36b is positioned at a level slightly higher than that of a lower inner surface of the common portion 36a.

In the case of loading a VHS tape cassette 1 into the tape player 33, the VHS tape cassette 1 is received into the common portion 36a of the cassette receiving hole 36 of the cassette holder 35 since the vertical dimension of the additional portion 36b of the cassette receiving hole 36 is smaller than the thickness of the cassette case 2 of the VHS tape cassette 1.

In the case of loading a HD tape cassette 8 into the tape player 33, the HD tape cassette 8 is received into both the common portion 36a and the additional portion 36b of the cassette receiving aperture 36 of the cassette holder 35, that is, into the whole area of the cassette receiving aperture 36.

When the HD tape cassette 8 is loaded in a predetermined loading position into the tape player 33, a reference pin 37 is inserted into the reference hole 29 formed through the lower wall of the additional portion 13 of the cassette case 9, thereby positioning the cassette case 9 with respect to the front and rear direction and the right and left direction. Furthermore, a directional positoning member 38 is inserted into the directional positoning hole 30 formed through the lower wall of the left side portion of the cassette case 9, thereby positioning the cassette case 9 with respect to a rotational direction about the reference pin 37. Thus, owing to the reference pin 37 and the directional positioning member 38, the cassette case 9 is positioned with respect to a horizontal direction. Moreover, upper end surfaces of two height limiting pins (not shown) come into abutment against right and left postions 39 on the lower surface of the main portion 12 of the cassette case 9 at the rear end portion thereof, thereby positioning the cassette case 9 with respect to a vertical direction.

A directional positioning member 38 is formed as a substantially plate-like member. An inner side edge 40 of the directional positioning member 38 has an inclined upper edge 40a which is so inclined as to extend upwardly away from the cassette loading portion. The directional positioning member 38 is rotatably supported at its upper end portion on a support pin 42 fixed to a chassis 41 of the tape player 33. A tension spring 43 is provided between a lower end portion of the directional postioning member 38 and the chassis 41 so as to apply to the member 38 a torque in a direction such that the inner side edge 40 is forced toward the cassette loading portion.

Under the condition in which the cassette case 9 is thus generally positioned by means of the cassette holder 35, and is finnally positioned by means of the reference pin 37 and the directional positioning member 38, the information recognizing portion 31 formed on the lower surface 13a of the additional portion 13 is positioned just above a plurality of detection switches 44 is such a manner that upper ends of pins 45 of the detection switches 44 respectively face the circular portions 32 of the information recognizing portion 31. Accordingly, in the case that a hole 46 is formed through the circular portion 32, the upper end of the pin 45 facing the corresponding circular portion 32 is inserted into the hole 46, and the pin 45 is therefore not depressed by the lower surface 13a of the additional portion 13. In the case that a hole 46 is not formed through the circular portion 32, the pin 45 facing the corresponding circular portion 32 is depressed by the lower surface 13a of the additional portion 13. Thus, it is detected whether or not holes 46 are present at the corresponding circular portions 32, and various information relating to the tape cassette 8 is read by the tape player 33 according to the above detection result. In this preferred embodiment, the detection switches 44 as information reading members are of a contact type. However, it is not necessary that the information reading members are such contact type switches. For instance, the information reading members could be formed by non-contact type members such as reflection type photosensors capable of detecting the presence or absence of holes 46 according to a difference in reflectance.

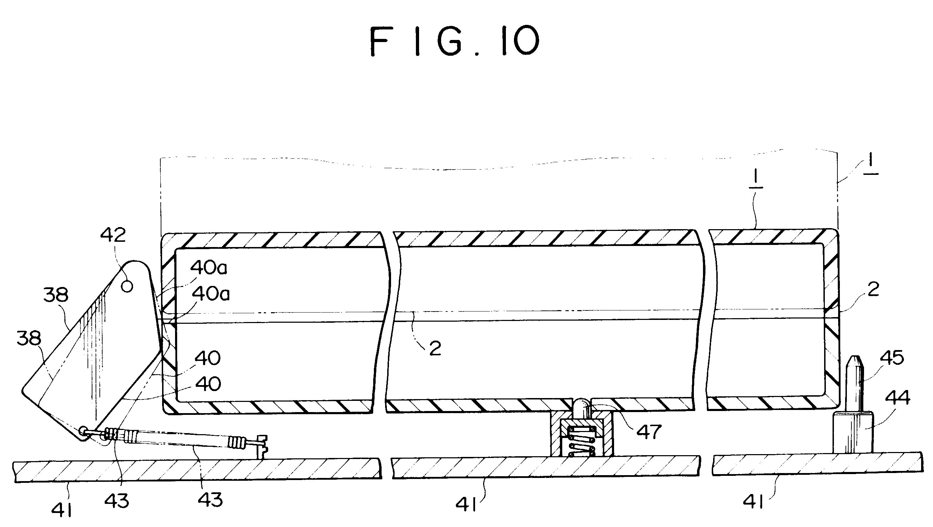

In the case that the VHS tape cassette 1 is loaded into the tape player 33, the loading position of the VHS tape cassette 1 with respect to the cassette loading portion is generally restricted by the cassette holder 35. Therefore, there is no possibility that the detection switches 44 for the HD tape cassette 8 will interfere with the VHS tape cassette 1 (see Figure 10). Accordingly, the detection switches 44 will not hinder the loading of the VHS tape cassette 1. Further, the detection switches 44 are prevented from malfunctioning due to the loading of the VHS tape cassette 1.

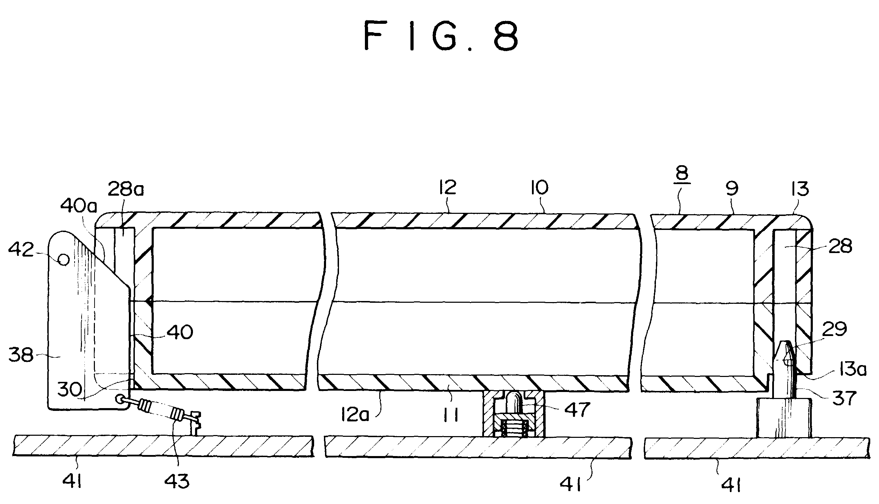

In Figures 8 and 10, a detection switch 47 is shown as the information reading member for the VHS tape cassette 1.

Although the directional positioning member 38 is located at a position interfering with the VHS tape cassette 1 upon loading, such interference is of no problem since, upon loading of the VHS tape cassette 1 into the tape player 33, one side edge of the lower surface of the cassette case 2 comes into abutment against the inclined upper edge 40a of the directional positioning member 38 and then depresses the inclined upper edge 40a. Accordingly, the directional positioning member 38 is rotated about the pin 42 against the tensile force of the tension spring 43 into a position in which it will not hinder loading of the cassette case 2 of the VHS tape cassette 1, thus generating no problem in the loading operation of the VHS tape cassette 1.

Although there has been described that the above effect of the present invention can be exhibited in the case that a tape cassette and a different type tape cassette (VHS tape cassette) can be commonly applied to a compatible VTR, the advantages of the invention can be sufficiently expected even if such a compatible VTR will not appear in the future. That is, a tape cassette according to the invention can have substantially the same external size as that of the conventional VHS tape cassette. Therefore in manufacturing a VTR dedicated for a tape cassette according to the invention, a cassette holder, cassette loading mechanism, tape loading mechanism, etc. of the conventional VTR dedicated for the VHS tape cassette can be directly utilized. Further, an automatic assembling system or the like for a conventional VTR can also be utilized. Accordingly, a great reduction in cost of parts and assembling can be expected, and the maintenance such as repairing or supplement can be made very easy.

## Claims

1. A video tape cassette (8) having a cassette case (9) composed of an upper half (10) and a lower half (11), a take-up reel and a supply reel (18, 19) accommodated in the cassette case, a magnetic recording tape (20) wrapped around the take-up reel and the supply reel and information recognizing means (31, 32, 46) to indicate information relating to a content of the tape cassette (8), the information recognizing means including a plurality of holes (46) to indicate predetermined characteristics of the tape cassette formed in a line along a corner portion where a bottom wall and a side wall of the lower half (11) intersect one another;
characterised in that the corner portion is formed with an elongate recess (13a) extending along the side wall, and the information recognizing means (31) is formed on a wall of the elongate recess.

2. A video tape cassette according to claim 1, wherein one of the holes (46) indicates the kind of magnetic recording tape accommodated in the cassette case (9).

3. A video tape cassette according to claim 1 or claim 2, wherein one of the holes (46) indicates the length of the magnetic recording tape accommodated in the cassette case (9).

4. A video tape cassette according to any one of claims 1 to 3, wherein one of the holes (46) indicates the frequency band of a signal recorded on the magnetic recording tape (20) accommodated in the cassette case (9).

## Patentansprüche

1. Videobandkassette (8) mit einem Kassettengehäuse (9), das aus einer oberen Hälfte (10) und einer unteren Hälfte (11) besteht, einer Aufnahmespule und einer Lieferspule (18, 19), die im Kassettengehäuse untergebracht sind, einem Magnetaufzeichnungsband (20), das um die Aufnahmespule und die Lieferspule geschlungen ist, und einer Informationserkennungseinrichtung (31, 32, 46), um die Information bezüglich eines Inhalts der Bandkassette (8) anzuzeigen, wobei die Informationserkennungseinrichtung mehrere Löcher (46), um bestimmte Merkmale der Bandkassette anzuzeigen, aufweist, die in einer Linie längs eines Eckenbereichs gebildet sind, wo eine Bodenwand und eine Seitenwand der unteren Hälfte (11) sich gegenseitig schneiden;
dadurch gekennzeichnet, daß
der Eckenbereich durch eine langgestreckte Ausdehnung (13a) gebildet ist, die sich längs der Seitenwand erstreckt, und die Informationserkennungseinrichtung (31) auf einer Wand der langgestreckten Ausnehmung gebildet ist.

2. Videobandkassette nach Anspruch 1, wobei eines der Löcher (46) die Art des Magnetaufzeichnungsbands anzeigt, das im Kassettengehäuse (9) untergebracht ist.

3. Videobandkassette nach Anspruch 1, oder 2, wobei eines der Löcher (46) die Länge des Magnetaufzeichnungsbands anzeigt, das im Kassettengehäuse (9) untergebracht ist.

4. Videobandkassette nach einem der Ansprüche 1 bis 3, wobei eines der Löcher (46) das Frequenzband eines Signals anzeigt, das auf dem Magnetaufzeichnungsband (20), welches im Kassettengehäuse (9) untergebracht ist, aufgezeichnet ist.

## Revendications

1. Cassette de bande vidéo (8) ayant un boîtier de cassette (9) composé d'une moitié supérieure (10) et d'une moitié inférieure (11), une bobine réceptrice et une bobine débitrice (18, 19) logées dans le boîtier de cassette, une bande d'enregistrement magnétique (20) enroulée autour de la bobine réceptrice et de la bobine débitrice, et des moyens de reconnaissance d'information (31, 32, 46) destinés à indiquer une information relative au contenu de la cassette de bande (8), les moyens de reconnaissance d'information comprenant une pluralité de trous (46) destinés à indiquer des caractéristiques prédéterminées de la cassette de bande, formés en une ligne le long d'une portion d'angle, à un endroit où une paroi de fond et une paroi latérale de la moitié inférieure (11) se coupent ;
caractérisée en ce que la portion d'angle est munie d'une cavité allongée (13a) s'étendant le long de la paroi latérale et les moyens de reconnaissance d'information (31) sont formés sur une paroi de la cavité allongée.

2. Cassette de bande vidéo selon la revendication 1, dans laquelle un des trous (46) indique le type de la bande d'enregistrement magnétique logée dans le boîtier de cassette (9).

3. Cassette de bande vidéo selon la revendication 1 ou la revendication 2, dans laquelle un des trous (46) indique la longueur de la bande d'enregistrement magnétique logée dans le boîtier de cassette (9).

4. Cassette de bande vidéo selon une quelconque des revendications 1 à 3, dans laquelle un des trous (46) indique la bande de fréquence d'un signal enregistré sur la bande d'enregistrement magnétique (20) logée dans le boîtier de cassette (9).
